# EUROPEAN PATENT SPECIFICATION

(11) **EP 2 722 691 B1**
(45) Date of publication and mention of the grant of the patent: **27.02.2019**
(21) Application number: 13188975.0
(22) Date of filing: 16.10.2013
(51) Int. Cl.: G01V 1/36, G01V 1/00

(54) **PLURAL DEPTH SEISMIC SOURCE SPREAD METHOD AND SYSTEM**
VERFAHREN UND SYSTEM ZUR STREUUNG SEISMISCHEN QUELLEN AUF MEHREREN TIEFEN
MÉTHODE ET SYSTÈME DE POSITIONNEMENT DES SOURCES SISMIQUES À PROFONDEURS MULTIPLES

(30) Priority: 16.10.2012 US 201261714387 P
(43) Date of publication of application: 23.04.2014
(73) Proprietor: CGG Services SAS, 91300 Massy (FR)
(72) Inventor: Cotton, Julien, 91300 Massy (FR); Duret, Florian, 91300 Massy (FR); Forgues, Eric, 91300 MASSY (FR)
(74) Representative: Petit, Maxime

(56) References cited:
- US-A1- 2006 262 645
- US-A1- 2010 008 184

## Description

### CROSS-REFERENCE TO RELATED APPLICATIONS

The present application is related to, and claims the benefit of priority of, U.S. Provisional Application 61/714,387, entitled "PLURAL DEPTH BURIED SEISMIC SOURCE SPREAD," and filed on 16 October 2012.

### BACKGROUND

### TECHNICAL FIELD

Embodiments of the subject matter disclosed herein relate generally to the field of geophysical data acquisition and processing. In particular, the embodiments disclosed herein relate to methods and systems for acquiring and processing seismic data from plural depth buried sources and receivers.

### DISCUSSION OF THE BACKGROUND

Geophysical data is useful for a variety of applications such as weather and climate forecasting, reservoir monitoring, subsoil imaging, environmental monitoring, agriculture, mining, and seismology. As the economic benefits of such data have been proven, and additional applications for geophysical data have been discovered and developed, the demand for localized, high-resolution, and cost-effective geophysical data has greatly increased. This trend is expected to continue.

For example, seismic data acquisition and processing may be used to generate a profile (image) of the geophysical structure under the ground (either on land or seabed). While this profile does not provide an exact location for oil and gas reservoirs, it suggests, to those trained in the field, the presence or absence of such reservoirs. Thus, providing a high-resolution image of the subsurface of the earth is important, for example, to those who need to determine where oil and gas reservoirs are located.

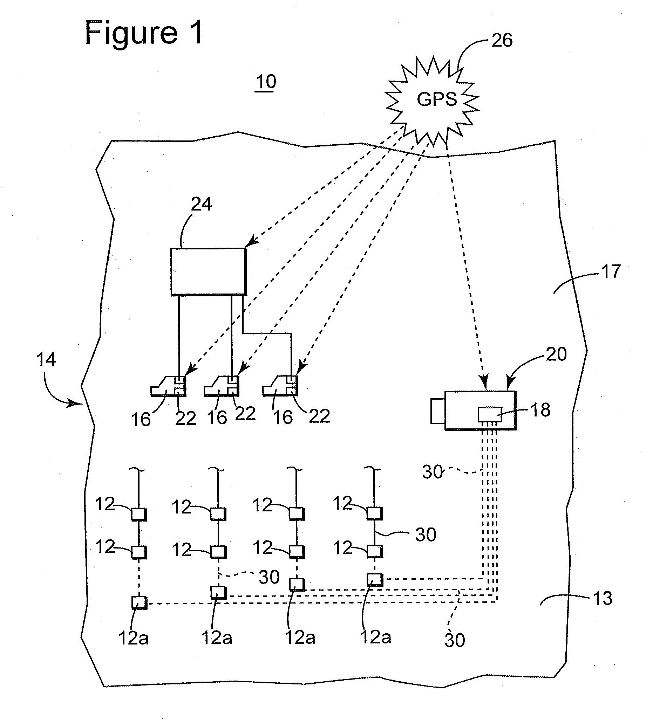

Traditionally, a land seismic survey system 10 capable of providing a high-resolution image of the subsurface of the earth is generally configured as illustrated in Figure 1 (although many other configurations are used). System 10 includes plural receivers 12 and acquisition units 12a positioned over an area 13 of a subsurface to be explored and in contact with the surface 14 of the ground. A number of seismic sources 16 are also placed on surface 14 in an area 17, in a vicinity of area 13 of receivers 12. A recording device 18 is connected to a plurality of receivers 12 and placed, for example, in a station-truck 20. Each source 16 may be composed of a variable number of vibrators or explosive devices, and may include a local controller 22. A central controller 24 may be present to coordinate the shooting times of the sources 16. A GPS system 26 may be used to time-correlate sources 16 and receivers 12 and/or acquisition units 12a.

With this configuration, the sources 16 are controlled to generate seismic waves, and the receivers 12 record the waves reflected by the subsurface. The receivers 12 and acquisition units 12a may be connected to each other and the recording devices with cables 30. Alternately, the receivers 12 and acquisition units 12a can be paired as autonomous nodes that do not need the cables 30. While the depicted seismic survey system 10 is a land seismic survey, an ocean bottom survey system may have similar components.

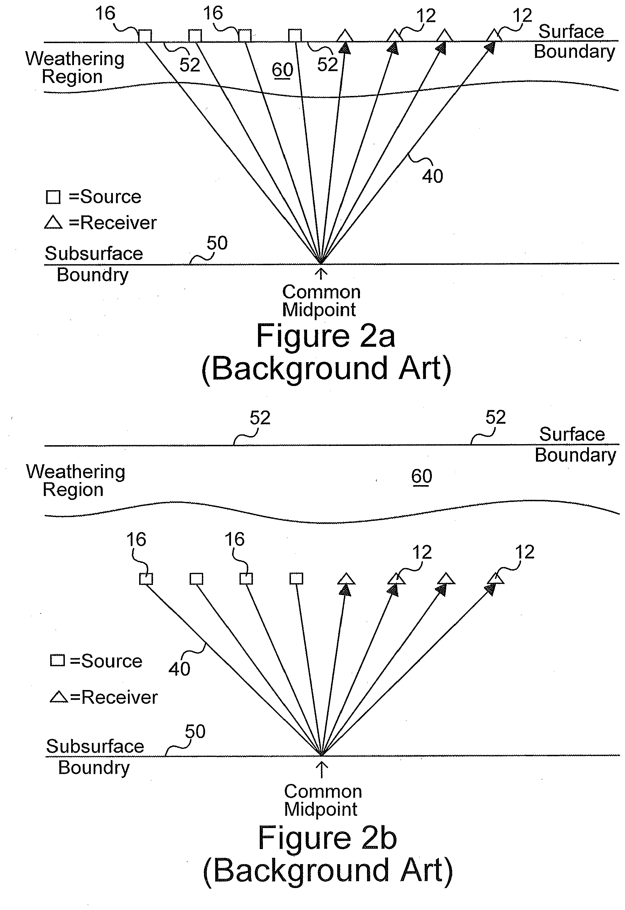

The purpose of seismic imaging is to generate high-resolution images of the subsurface from acoustic reflection measurements made by the receivers 12. Conventionally, as shown in Figure 2a, the seismic sources 16 and receivers 12 are distributed on the ground surface at a distance from each other. The sources 16 are activated to produce seismic waves that travel through the subsoil. These seismic waves undergo deviations as they propagate. They are refracted, reflected, and diffracted at the geological interfaces of the subsoil. For example, waves 40 that travel through the subsoil and are reflected from a subsurface 50 may be detected by the seismic receivers 12. The reflected waves may be recorded as a function of time in the form of signals (called traces).

The seismic sources 16 may be placed at a variety of source locations and the receivers 12 may be placed at a variety of receiving locations on the surface 52. The source locations and the receiving locations may be selected to provide a sufficient number of traces to capture the features of the subsurface with high fidelity.

In many seismic survey applications, known as 4D seismic surveys, it is desirable to detect changes in the subsurface 50 over time. However, with the configuration shown in Figure 2a, variations in the surface 52 and the weathering region 60 may be subject to significant changes that make it difficult to detect changes in the subsurface 50. For example, the moisture content of the weathering region 60 may change dramatically and alter the velocity of the waves 40. The surface 52 may also be subject to erosion or soil deposition that alters the position of the sources 16 and receivers 12 relative to the subsurface 50.

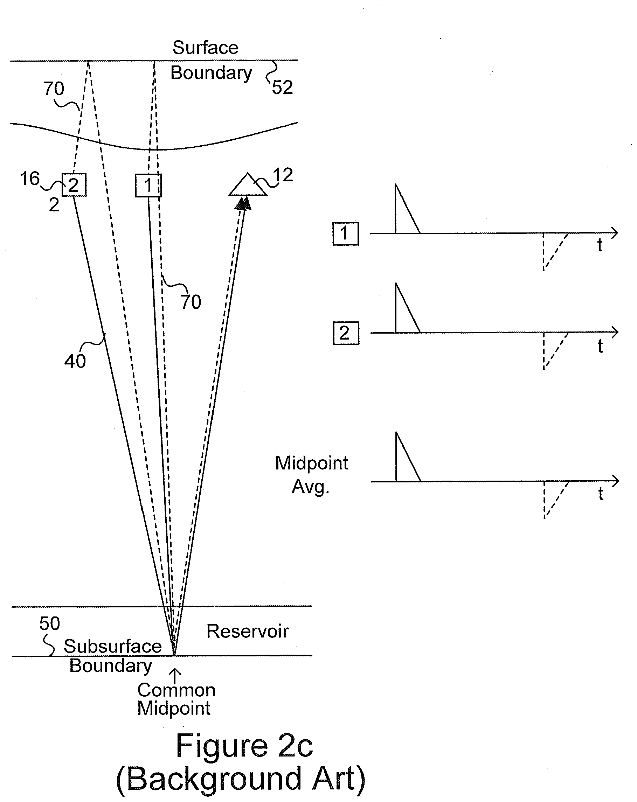

To mitigate the changing conditions of the surface 52 and the weathering region 60, the sources 16 and receivers 12 may be buried below the weathering region 60 and placed in a region of greater stability as is shown in Figure 2b. However, as shown in Figure 2c, ghost reflections 70 of the waves 40 from the weathering region 60 and the surface 52 contribute to the signal received by the receivers 12 resulting in additional 4D noise and reduced accuracy.

US2006262645 discloses the use of plural seismic sources buried at plural depths in order to account for reverberations between different layers when processing the data. US2010008184 discloses the use of seismic sources at different depths in a marine survey to facilitate wavefield separation in order to deghost data. EP2713184 discloses the use of seismic sensors buried at different depths.

Due to the foregoing, there is a need for seismic data acquisition and processing systems and methods that are able to reduce noise from ghost reflections

### SUMMARY

As detailed herein, a method for acquiring and improving seismic data is disclosed in independent claim 1. The method may also include determining changes to the regions below the second depth by comparing de-ghosted seismic data corresponding to a first acquisition event with de-ghosted seismic data corresponding to a second acquisition event. A corresponding system is also disclosed in independent claim 7.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram depicting a traditional land seismic survey system;
Figure 2a is a schematic diagram depicting selected portions of a traditional 4D reservoir monitoring system with sources and receivers placed proximate to a geophysical surface;
Figure 2b is a schematic diagram depicting selected portions of a traditional 4D reservoir monitoring system with sources and receivers buried below the geophysical surface;
Figure 2c is a schematic diagram depicting ghost reflections associated with traditional 4D reservoir monitoring systems;
Figure 3 is a schematic diagram depicting selected portions of a 4D monitoring system with buried plural depth sources and receivers;
Figure 4 is a schematic diagram depicting reduced ghost reflections associated with a plural depth source spread;
Figure 5a is a schematic diagram depicting reduced ghost reflections associated with a plural depth receiver spread;
Figure 5b is a timing diagram depicting shifted reflections associated with a shifting subsurface in a 4D seismic survey that leverages a plural depth source or a plural depth receiver spread;
Figure 6 is a flowchart diagram depicting one embodiment of a plural depth seismic processing method;
Figure 7 is a flowchart diagram depicting one embodiment of a 4D plural depth seismic processing method;
Figures 8a-8d are schematic diagrams depicting various placement configurations for plural depth source and/or receiver spreads;
Figure 9 is a flowchart diagram depicting one embodiment of a plural depth processing method;
Figure 10 is a plot of seismic data processed from single depth seismic sources;
Figure 11 is a plot of seismic data processed from plural depth seismic sources; and
Figure 12 is a block diagram of a computing device for processing seismic data.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures, or characteristics may be combined in any suitable manner in one or more embodiments.

A system and method for acquiring and improving seismic data is presented herein. Applicants have observed that the data precision and stability obtained with disclosed system and method enables subsurface change detection with shorter elapsed times and smaller amplitude variations than attainable with conventional systems and methods. For example, amplitude variations associated with steam injection into a reservoir are detectable with the disclosed system and method.

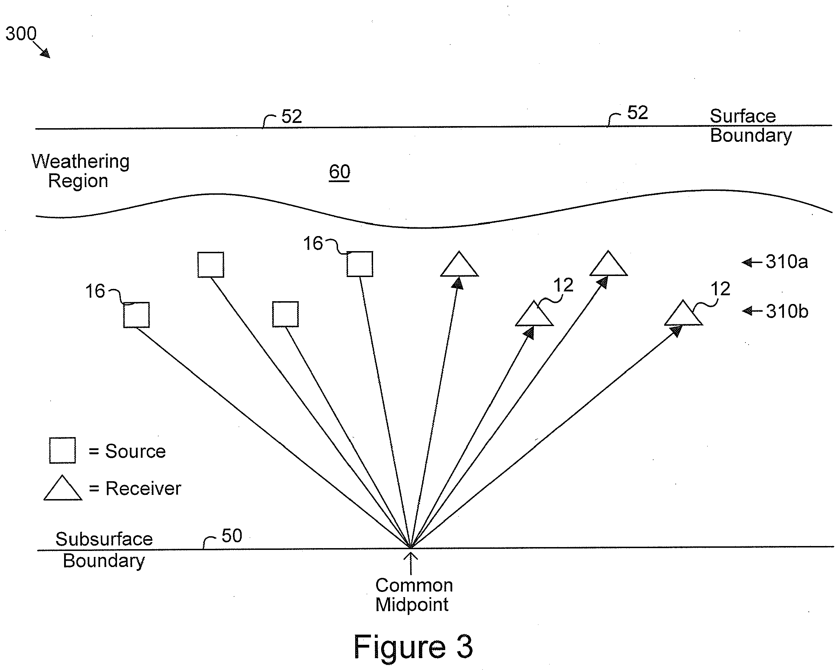

Figure 3 is a schematic diagram depicting selected portions of a 4D monitoring system 300 with buried plural depth sources and/or receivers. The 4D monitoring system 300 includes one or more sources 16 and one or more receivers 12 that are placed at plural depths 310 below a geophysical surface such as the surface of the earth, a seabed, a river bed or the like. In the depicted arrangement, the plural depths 310 include a first depth 310a and a second depth 310b. The use of plural depths reduces ghost reflections and improves 4D seismic repeatability as will be shown in subsequent figures.

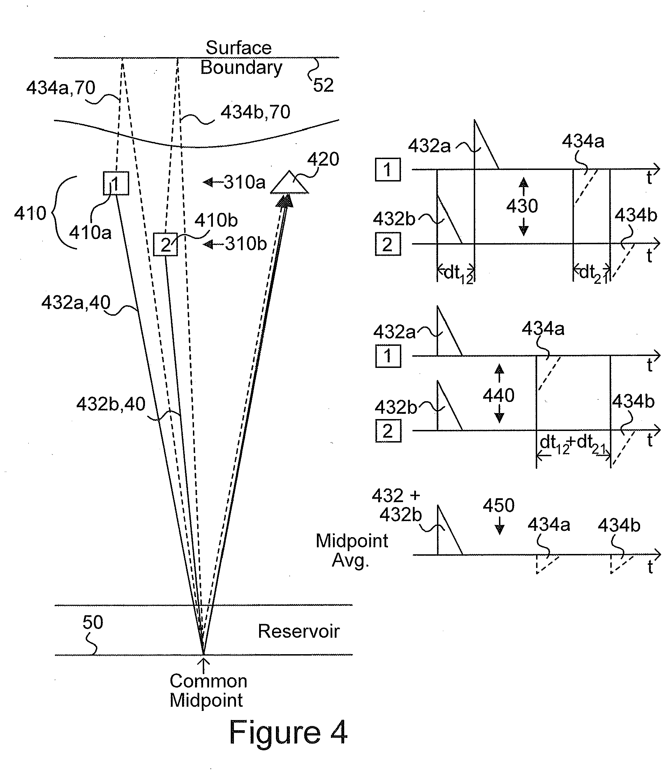

Figure 4 is a schematic diagram depicting one example of reduced ghost reflections that may occur for a plural depth source spread 410. The depicted source spread 410 includes a source 410a at a first depth 310a and a source 410b at a second depth 310b. For the purpose of clarity, a simplified scenario, where the reflection angles are assumed to be substantially vertical, demonstrates how the source spread 410 reduces ghost reflections and improves 4D seismic repeatability.

A seismic source wave such as an impulse may be generated by each source in the source spread 410 at a distinct time. In response thereto, a trace corresponding to each source may be recorded by a receiver 420. As shown on the right side of Figure 4, the traces may be time-aligned relative to the firing of the sources 410a and 410b to provide synchronized traces 430. In one embodiment, time alignment is enabled by synchronized clocks on the sources 410 and the receiver 420.

Due to the difference in depths between the source 410a and the source 410b, a primary (i.e., subsurface) reflection 432b from the source 410b arrives at the receiver 420 earlier (e.g., by time difference dt₁₂) relative to the source event than a primary reflection 432a from the source 410a The difference in depths between the source 410a and the source 410b also results in a ghost reflection 434b from the source 410b arriving at the receiver 420 earlier (e.g., by time difference dt₂₁) relative to the source event than a ghost reflection 434a from the source 410a. The time difference dt₁₂ may be substantially equal to dt₂₁ despite a difference in the direction of wave propagation between the source 410a and the source 410b for the primary reflections 432 and the ghost reflections 434.

During processing, one of the traces 430 is phase or time shifted to provide aligned traces 440 where the primary reflections 432a and 432b are aligned and the ghost reflections 434a and 434b are further misaligned. Subsequently, the traces may be summed or averaged to provide a common midpoint trace 450 with reduced ghost reflections 434a and 434b relative to the primary reflections 432a and 432b.

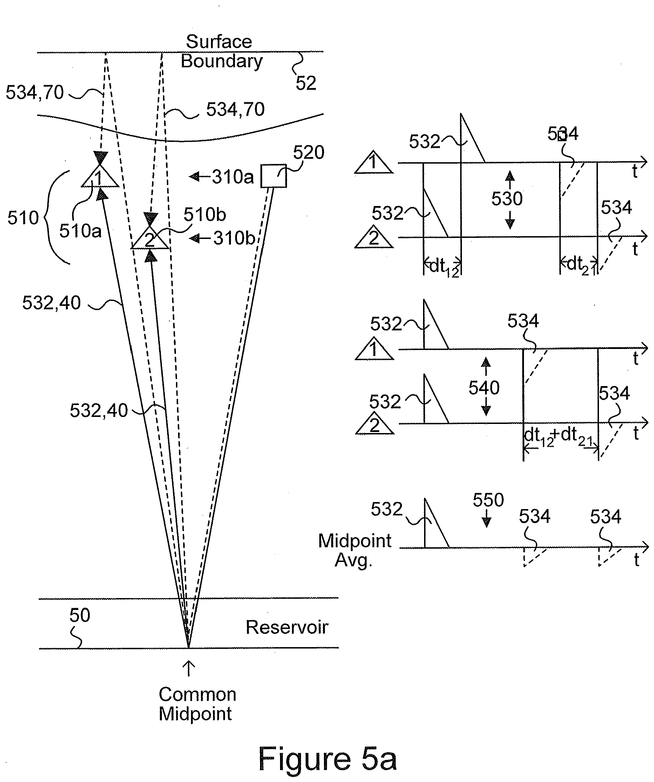

Figure 5a is a schematic diagram depicting one example of reduced ghost reflections that may occur for a plural depth receiver spread 510. The depicted receiver spread 510 includes a receiver 510a at a first depth 310a and a receiver 510b at a second depth 310b. For the purpose of clarity. a simplified scenario, where the reflection angles are assumed to be substantially vertical, demonstrates how the receiver spread 510 reduces ghost reflections and improves 4D seismic repeatability.

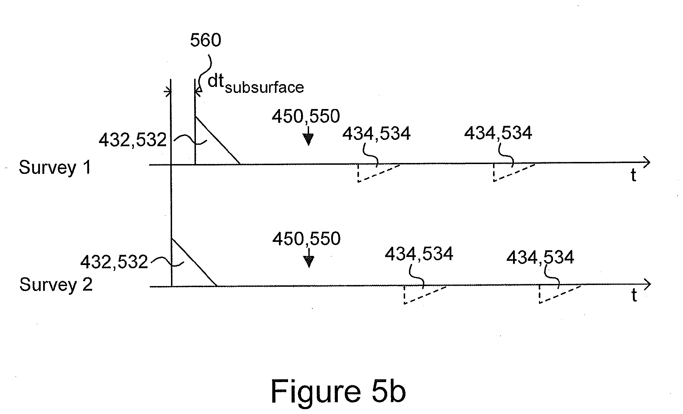

A seismic source wave such as an impulse may be generated by the source 520 at a distinct time. In response thereto, a trace corresponding to each source may be recorded by each receiver in the receiver spread 510. As shown on the right side of Figure 5, the traces may be time-aligned relative to the firing of the source 520 to provide synchronized traces 530. In one embodiment, time alignment is enabled by synchronized clocks on the source 520 and each receiver of the receiver spread 510.

Due to the difference in depths between the receiver 510a and the receiver 510b, a primary (i.e., subsurface) reflection 532 from the source 520 arrives at the receiver 510b earlier (e.g., by time difference dt₂₁) relative to the source event than the primary reflection 532 arrives at the receiver 510a The difference in depths between the receiver 510a and the receiver 510b also results in a ghost reflection 534 from the source 520 arriving at the receiver 510a earlier (e.g., by time difference dt₁₂) relative to the source event than the ghost reflection 534 arrives at the receiver 510b. The time difference dt₁₂ may be substantially equal to dt₂₁ despite a difference in the direction of wave propagation between the receiver 510a and the receiver 510b for the primary reflection 532 and the ghost reflection 534.

During processing, one of the traces 530 is phase or time shifted to provide aligned traces 540 where the primary reflections 532 are aligned and the ghost reflections 534 are further misaligned. Subsequently, the traces 540 may be summed or averaged to provide a common midpoint trace 550 with reduced ghost reflections 534 relative to the summed or averaged primary reflection 532.

The simplicity of the above scenarios demonstrates the value of using a plural depth source spread and/or a plural depth receiver spread. As shown in Figures 4 and 5a, and in comparison to the prior art (see, for example, Figure 2c) ghost reflections may be significantly reduced and result in improved seismic data. Furthermore (optional) explicit de-ghosting operations may be conducted on the improved seismic data (e.g., seismic data filtering or generating a model of the primary reflections using matrix inversion) in order to further reduce ghost reflections.

Figure 5b is a timing diagram depicting shifted primary and ghost reflections associated with a shifting subsurface in a 4D seismic survey that leverages a plural depth source or a plural depth receiver spread. As is shown, reduced ghost reflections 434 or 534 may enable better detection of subsurface changes by enabling improved detection of a timing shift for the primary reflections 432 or 532 over single depth surveys. The timing shift 560 may be used to determine a corresponding subsurface shift (not shown).

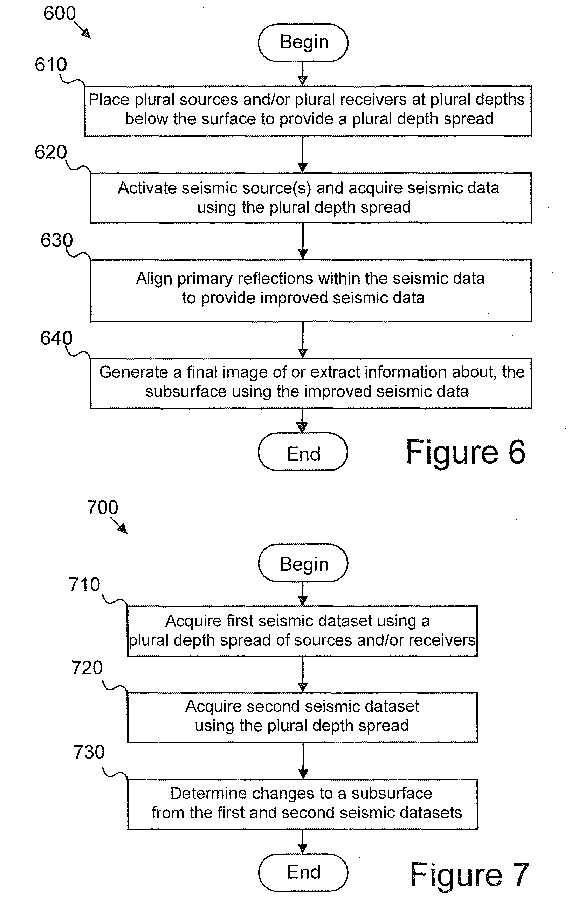

Figure 6 is a flowchart diagram depicting one embodiment of a plural depth seismic processing method 600. As depicted, the method 600 includes, placing 610 plural sources and/or plural receivers at plural depths to provide a plural depth spread, activating one or more seismic sources and acquiring 620 seismic data using the plural depth spread, aligning 630 primary reflections within the seismic data, and generating 640 a final image of, or extracting 640 information about, the subsurface.

Placing 610 plural sources and/or plural receivers at plural depths may include boring holes into the ground (on land or underwater) into which multiple sources and/or receivers are placed. In some embodiments, two or more sources and/or receivers may be placed into the same hole at different depths. The placed sources and receivers may provide a plural depth spread 410 and/or a plural depth spread 510.

Activating one or more seismic sources and acquiring 620 seismic data using the plural depth spread may include leveraging the seismic survey system 10 configured as shown in Figure 3 or using a similar system and configuration. The sources within the system may be fired in a manner that facilitates separation, i.e., impulsive sources may be separated in time while vibratory sources may be separated in time and/or frequency.

Aligning 630 primary reflections within the seismic data may include determining a depth or position difference between the plural depth sources and/or receivers and using the depth or position difference to align the primary reflections within the seismic data. The depth or position difference may be determined from GPS data for the sources and receivers or from data collected when the sources or receivers were placed by a field crew.

Generating 640 a final image of, or extracting 640 information about, the subsurface may include conducting operations familiar to those of skill in the art such as a common image point (i.e., midpoint) gather, common receiver gather, common source gather, common offset gather, cross-spread gather, and the like. The final image of the subsurface or the extracted information may communicate specific details about the subsurface including layer boundaries, velocity parameters, saturation, porosity, permeability, amplitude variation with offset or azimuth, or the like.

Figure 7 is a flowchart diagram depicting one embodiment of a 4D plural depth seismic processing method 700. As depicted, the method 700 includes acquiring 710 a first seismic dataset using a plural depth spread, acquiring 720 a second seismic dataset using the plural depth spread, and determining 730 changes to a subsurface.

The acquiring operations 710 and 720 may be conducted according to the plural depth seismic processing method 600 described above or a similar method. The operation 710 may be conducted on a first seismic dataset collected during a first survey and the operation 720 may be conducted on a second seismic dataset collected during a second survey.

Determining 730 changes to a subsurface from the first and second seismic datasets may include aligning primary reflections within the first and second datasets and conducting various operations including cross-correlation, reservoir inversion, differencing, NRMS, and change prediction.

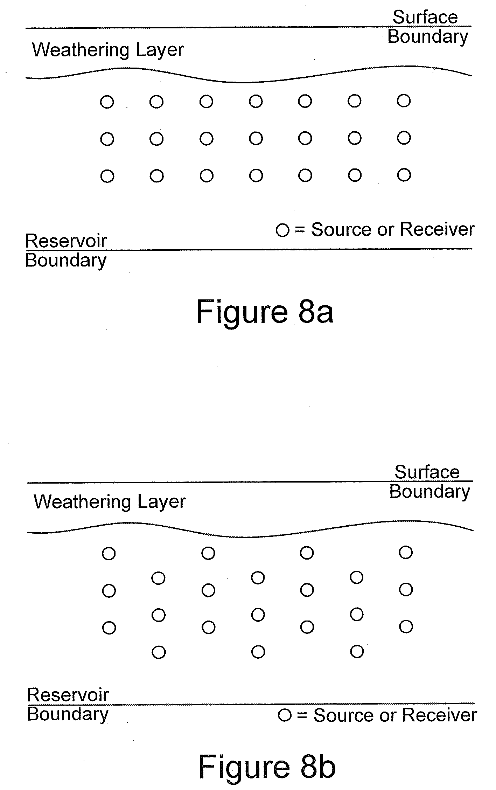

Figures 8a-8d are schematic diagrams depicting various placement configurations for plural depth source and/or receiver spreads. The depicted configurations are intended to be illustrative rather than definitive. For example, Figures 8a-8d show two-dimensional configurations while actual deployed configurations may be three-dimensional.

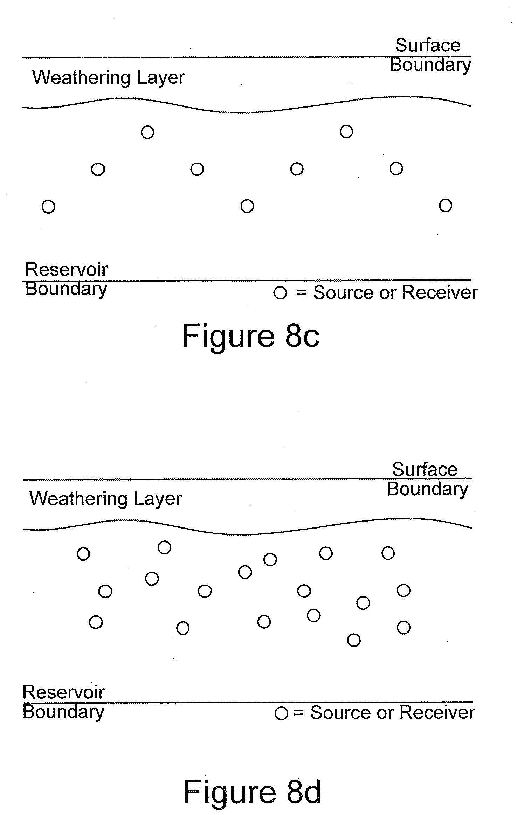

Figures 8a and 8b depict a grid configuration and an offset grid configuration, respectively. Figure 8c shows a sawtooth configuration and Figure 8d shows a random configuration. Selection of a configuration may be application and/or objective dependent. For example, the position of the sources and/or receivers may be selected to minimize aliasing, reduce cost, or a combination thereof.

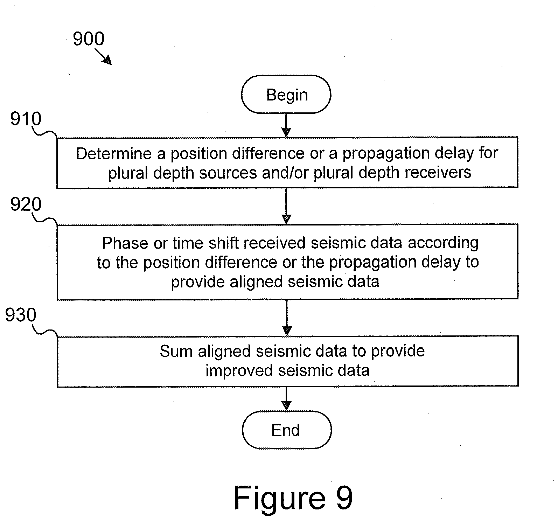

Figure 9 is a flowchart diagram depicting one embodiment of a plural depth processing method 900. As depicted, the method 900 includes determining 910 a position difference or a propagation delay for plural depth sources and/or plural depth receivers, phase or time shifting 920 received seismic data according to the position difference or propagation delay to provide aligned seismic data, and summing 930 the aligned seismic data to provide improved seismic data. The improved seismic data provided by the method 900 may enable improved subsurface imaging and change detection.

Determining 910 a position difference or a propagation delay for plural depth sources and/or plural depth receivers may include accessing GPS data for the plural depth sources and/or receivers. In some embodiments, the propagation delay is computed directly from synchronized seismic traces. In some situations, the position difference may be substantially identical to a depth difference.

Phase or time shifting 920 received seismic data according to the position difference or propagation delay may include determining an average velocity within the spread and converting the position difference to a phase or time difference. In another embodiment, the phase or time difference is computed directly from the seismic traces. A time difference may be converted to a specific phase by knowing the frequency content of the source. Phase or time shifting the seismic data according to the position difference or the propagation delay may align the primary reflections within the seismic data and thereby provide aligned seismic data.

Summing 930 the aligned seismic data may include summing traces that have their primary reflections aligned with one another. One of skill in the art may recognize that operations 920 and 930 may be accomplished with a digital filter that includes one or more taps corresponding to phase shift terms.

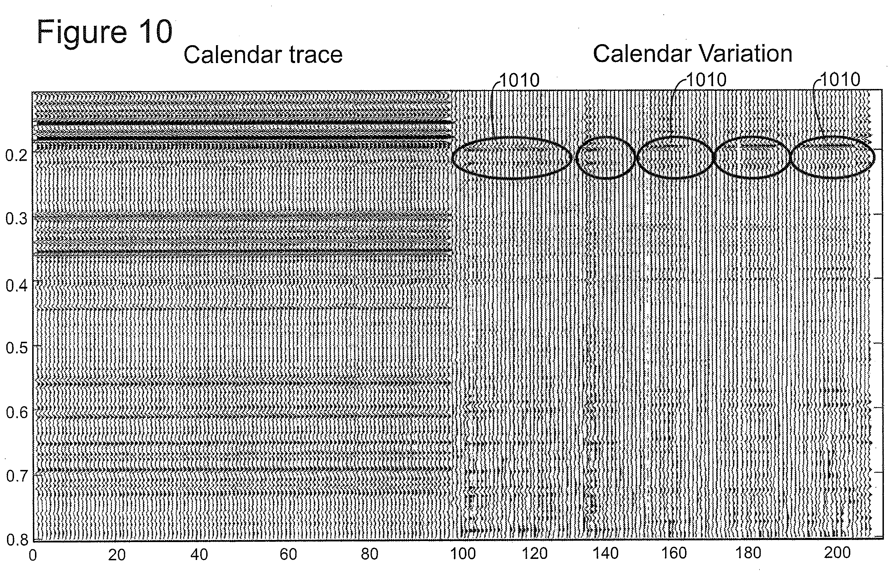

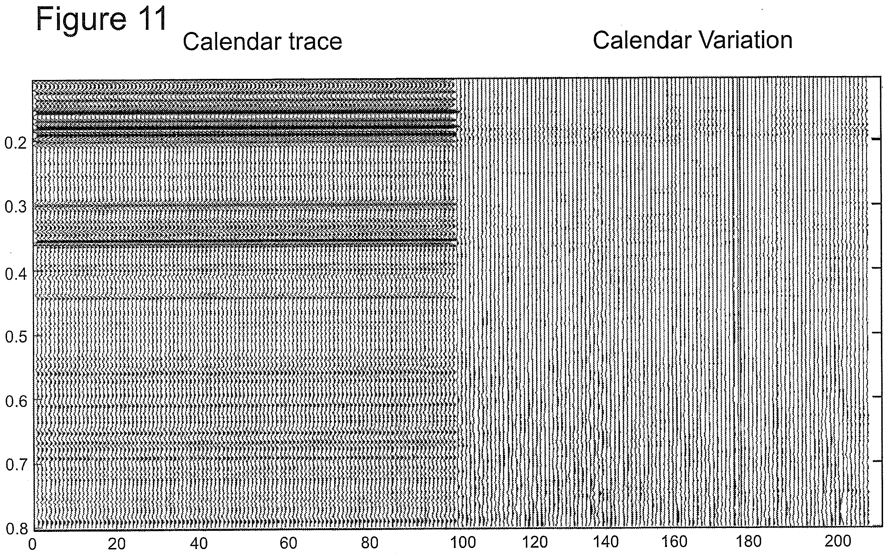

Figure 10 is a plot of seismic data processed from single depth seismic sources and receivers and Figure 11 is a plot of seismic data processed from plural depth seismic sources at depths of 25, 28, and 35 meters and plural depth receivers at depths of 6 and 9 meters. Figures 10 and 11 were generated from real seismic data collected for the same region. Figure 10 was processed using conventional techniques while Figure 11 was processed using the methods described herein.

As mentioned above, Applicants have observed that the data precision and stability obtained with the systems and methods disclosed herein enable subsurface change detection with shorter elapsed times and for smaller amplitude variations than previously possible. Figures 10 and 11 are evidence of that observed improvement. While Figure 10 shows significant residual noise 1010 (highlighted with an oval), the residual noise is substantially eliminated in Figure 11.

In addition to shorter elapsed times and detection of smaller amplitude variations, the systems and methods disclosed herein may increase the signal-to-noise ratio of seismic data, improve 4D seismic repeatability, increase frequency content, reduce positioning error between acquisitions, subdue industrial noise, and enable Stratigraphic Inversion. Applicants assert that improvement in the aforementioned metrics and attributes may be seen with depth variations of as small as .3 meters (corresponding to a propagation delay of approximately .25 milliseconds).

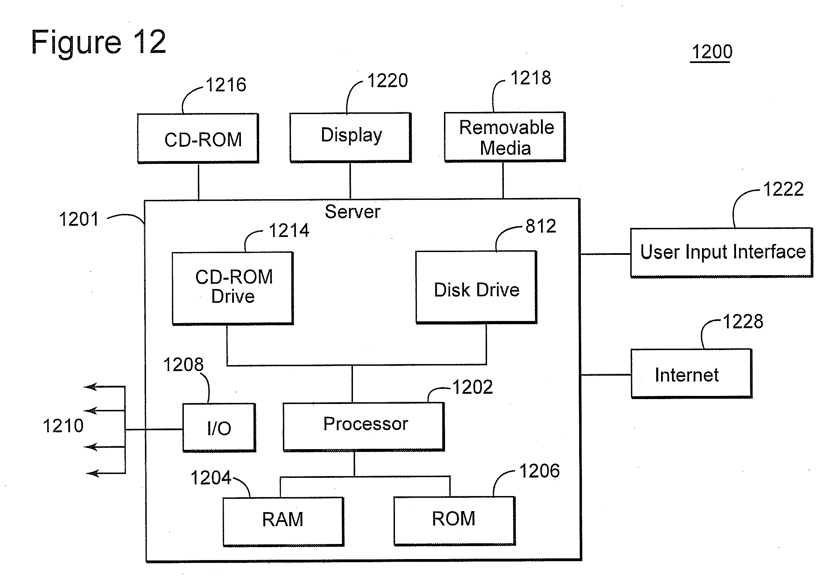

The above-discussed procedures and methods may be implemented partially or wholly in the computing device illustrated in Figure 12. Hardware, firmware, software, or a combination thereof may be used to perform the various steps and operations described herein. The computing device 1200 of Figure 12 is an exemplary computing structure that may be used in connection with such a system.

The computing device 1200 may include a server 1201. Such a server 1201 may include a central processor (CPU) 1202 coupled to a random access memory (RAM) 1204 and to a read only memory (ROM) 1206. The ROM 1206 may also be other types of storage media to store programs, such as programmable ROM (PROM), erasable PROM (EPROM), etc. The processor 1202 may communicate with other internal and external components through input/output (I/O) circuitry 1208 and bussing 1210, to provide control signals and the like. The processor 1202 carries out a variety of functions as are known in the art, as dictated by software and/or firmware instructions.

The server 1201 may also include one or more data storage devices, including disk drives 1212, CDDROM drives 1214, and other hardware capable of reading and/or storing information such as DVD, etc. In one embodiment, software for carrying out the above-discussed steps may be stored and distributed on a CDDROM or DVD 1216, a USB storage device 1218 or other form of media capable of portably storing information. These storage media may be inserted into, and read by, devices such as the CDDROM drive 1214, the disk drive 1212, etc. The server 1201 may be coupled to a display 1220, which may be any type of known display or presentation screen, such as LCD displays, plasma display, cathode ray tubes (CRT), etc. A user input interface 1222 is provided, including one or more user interface mechanisms such as a mouse, keyboard, microphone, touchpad, touch screen, voice-recognition system, etc.

The server 1201 may be coupled to other devices, such as sources, detectors, etc. The server may be part of a larger network configuration as in a global area network (GAN) such as the Internet 1228, which allows ultimate connection to the various landline and/or mobile computing devices.

The disclosed exemplary embodiments provide a computing device, a method for acquiring and de-ghosting seismic data, and systems corresponding thereto. For example, the disclosed computing device and method could be integrated into a variety of seismic survey and processing systems including land, ocean bottom, and transitional zone systems with either cabled or autonomous data acquisition nodes. It should be understood that this description is not intended to limit the invention. On the contrary, the exemplary embodiments are intended to cover alternatives, modifications, and equivalents, which are included in the scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations and sequences with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims.

## Claims

1. A method (600) comprising:
burying (610) plural seismic sources (16; 410a, 410b) at plural depths below a geophysical surface, said geophysical surface being an earth surface or a seabed or a river bed, said plural depths comprising at least a first depth (310a) and a second depth (310b), wherein the second depth is below the first depth; and
acquiring (620) seismic data with at least one seismic receiver (12; 420) located below the geophysical surface in conjunction with activating said plural seismic sources, wherein seismic data comprise, for each of said plural seismic sources, a trace (430) including primary reflections (432a, 432b) and ghost reflections (434a, 434b);
**characterized in that** said method further comprises aligning (630) primary reflections within the seismic data to provide improved seismic data, wherein aligning (630) comprises phase-shifting or time shifting said traces by an amount depending on a difference between said first depth and said second depth .

2. The method of claim 1, wherein aligning primary reflections misaligns ghost reflections (434a, 434b) within the seismic data that correspond to regions above the first depth (310a).

3. The method of claim 1, wherein the primary reflections correspond to regions below the second depth (310b).

4. The method of claim 3, further comprising determining changes to the regions below the second depth (310b).

5. The method of claim 4, wherein determining changes to the regions below the second depth comprises comparing improved seismic data corresponding to a first acquisition event with improved seismic data corresponding to a second acquisition event.

6. The method of claim 1, wherein an amount of phase-shifting or time shifting corresponds to a position difference or a propagation delay between a seismic source located at the first depth and a seismic source located at the second depth.

7. A system comprising:
a first seismic source (410a) located below a geophysical surface at a first depth (310a) and a second seismic source (410b) located below the geophysical surface at a second depth (310b), wherein the second depth is below the first depth, and wherein said geophysical surface is an earth surface or a seabed or a river bed;
a seismic receiver (420) located below the geophysical surface and configured to acquire seismic data in conjunction with activating said plural seismic sources, wherein seismic data comprise, for each of said first seismic source and second seismic source, a trace (430) including primary reflections (432a, 432b) and ghost reflections (434a, 434b); and
a processor (1200),
**characterized in that** said processor (1200) is configured to align primary reflections within the seismic data to provide improved seismic data, wherein aligning (630) comprises phase-shifting or time shifting said traces by an amount depending on a difference between said first depth and said second depth.

8. The system of claim 7, wherein aligning primary reflections misaligns ghost reflections (434a, 434b) within the seismic data that correspond to regions above the first depth (310a).

9. The system of claim 7, wherein the primary reflections correspond to regions below the second depth (310b).

10. The system of claim 9, wherein the processor (1200) is configured to determine changes to the regions below the second depth (310b).

11. The system of claim 10, wherein the processor (1200) determines the changes to the regions below the second depth by comparing improved seismic data corresponding to a first acquisition event with improved seismic data corresponding to a second acquisition event.

12. The system of claim 7, wherein an amount of phase shift or time shift corresponds to a position difference or a propagation delay between the first seismic source and the second seismic source.

## Patentansprüche

1. Verfahren (600), Folgendes umfassend:
Versenken (610) mehrerer seismischer Quellen (16, 410a, 410b) in mehreren Tiefen unterhalb einer geophysischen Oberfläche, wobei die geophysische Oberfläche eine Erdoberfläche oder ein Meeresboden oder ein Flussbett ist, wobei die mehreren Tiefen mindestens eine erste Tiefe (310a) und eine zweite Tiefe (310b) umfassen, wobei die zweite Tiefe unterhalb der ersten Tiefe liegt, und
Erfassen (620) seismischer Daten mit mindestens einem seismischen Empfänger (12, 420), der sich unterhalb der geophysischen Oberfläche befindet, in Verbindung mit dem Aktivieren der mehreren seismischen Quellen, wobei die seismischen Daten für jede der mehreren seismischen Quellen eine Abtastspur (430) umfassen, einschließlich Primärreflexionen (432a, 432b) und Geisterreflexionen (434a, 434b),
**dadurch gekennzeichnet, dass** das Verfahren ferner das Abgleichen (630) der Primärreflexionen in den seismischen Daten umfasst, um verbesserte seismische Daten bereitzustellen, wobei das Abgleichen (630) das Phasenverschieden oder Zeitverschieben der Abtastspuren um ein Quantum umfasst, das von einer Differenz zwischen der ersten Tiefe und der zweiten Tiefe abhängt.

2. Verfahren nach Anspruch 1, wobei das Abgleichen der Primärreflexionen die Geisterreflexionen (434a, 434b) in den seismischen Daten versetzt, die Regionen oberhalb der ersten Tiefe (310a) entsprechen.

3. Verfahren nach Anspruch 1, wobei die Primärreflexionen Regionen unterhalb der zweiten Tiefe (310b) entsprechen.

4. Verfahren nach Anspruch 3, ferner das Bestimmen von Veränderungen an den Regionen unterhalb der zweiten Tiefe (310b) umfassend.

5. Verfahren nach Anspruch 4, wobei das Bestimmen von Veränderungen an den Regionen unterhalb der zweiten Tiefe das Vergleichen verbesserter seismischer Daten, die einem ersten Erfassungsereignis entsprechen, mit verbesserten seismischen Daten, die einem zweiten Erfassungsereignis entsprechen, umfasst.

6. Verfahren nach Anspruch 1, wobei ein Quantum der Phasenverschiebung oder der Zeitverschiebung einer Positionsdifferenz oder einer Ausbreitungsverzögerung zwischen einer auf der ersten Tiefe befindlichen seismischen Quelle und einer auf der zweiten Tiefe befindlichen seismischen Quelle entspricht.

7. System, Folgendes umfassend:
eine erste seismische Quelle (410a), die sich in einer ersten Tiefe (310a) unterhalb einer geophysischen Oberfläche befindet, und eine zweite seismische Quelle (410b), die sich in einer zweiten Tiefe (310b) unterhalb der geophysischen Oberfläche befindet, wobei die zweite Tiefe unterhalb der ersten Tiefe liegt, und wobei die geophysische Oberfläche eine Erdoberfläche oder ein Meeresboden oder ein Flussbett ist,
einen seismischen Empfänger (420), der sich unterhalb der geophysischen Oberfläche befindet und dafür konfiguriert ist, seismische Daten in Verbindung mit dem Aktivieren der mehreren seismischen Quellen zu erfassen, wobei die seismischen Daten für jeweils die erste und die zweite seismische Quelle eine Abtastspur (430) umfassen, einschließlich Primärreflexionen (432a, 432b) und Geisterreflexionen (434a, 434b), und
einen Prozessor (1200),
**dadurch gekennzeichnet, dass** der Prozessor (1200) dafür konfiguriert ist, Primärreflexionen in den seismischen Daten abzugleichen, um verbesserte seismische Daten bereitzustellen, wobei das Abgleichen (630) das Phasenverschieden oder Zeitverschieben der Abtastspuren um ein Quantum umfasst, das von einer Differenz zwischen der ersten Tiefe und der zweiten Tiefe abhängt.

8. System nach Anspruch 7, wobei das Abgleichen von Primärreflexionen die Geisterreflexionen (434a, 434b) in den seismischen Daten versetzt, die Regionen oberhalb der ersten Tiefe (310a) entsprechen.

9. System nach Anspruch 7, wobei die Primärreflexionen Regionen unterhalb der zweiten Tiefe (310b) entsprechen.

10. System nach Anspruch 9, wobei der Prozessor (1200) dafür konfiguriert ist, Veränderungen der Regionen unterhalb der zweiten Tiefe (310b) zu bestimmen.

11. System nach Anspruch 10, wobei der Prozessor (1200) die Veränderungen der Regionen unterhalb der zweiten Tiefe durch Vergleichen verbesserter seismischer Daten, die einem ersten Erfassungsereignis entsprechen, mit verbesserten seismischen Daten, die einem zweiten Erfassungsereignis entsprechen, bestimmt.

12. System nach Anspruch 7, wobei ein Quantum der Phasenverschiebung oder der Zeitverschiebung einer Positionsdifferenz oder einer Ausbreitungsverzögerung zwischen der ersten seismischen Quelle und der zweiten seismischen Quelle entspricht.

## Revendications

1. Procédé (600) comprenant :
l'enfouissement (610) d'une pluralité de sources sismiques (16 ; 410a, 410b) à une pluralité de profondeurs au-dessous d'une surface géophysique, ladite surface géophysique étant une surface terrestre ou un lit marin ou un lit de rivière, ladite pluralité de profondeurs comprenant au moins une première profondeur (310a) et une deuxième profondeur (310b), dans lequel la deuxième profondeur est au-dessous de la première profondeur ; et
l'acquisition (620) de données sismiques avec au moins un récepteur sismique (12 ; 420) situé au-dessous de la surface géophysique conjointement avec l'activation de ladite pluralité de sources sismiques, dans lequel les données sismiques comprennent, pour chacune de ladite pluralité de sources sismiques, une trace (430) comprenant des réflexions primaires (432a, 432b) et des réflexions fantômes (434a, 434b) ;
**caractérisé en ce que** ledit procédé comprend en outre l'alignement (630) des réflexions primaires dans les données sismiques pour fournir des données sismiques améliorées, dans lequel l'alignement (630) comprend le déphasage ou le décalage temporel desdites traces d'une quantité fonction d'une différence entre ladite première profondeur et ladite deuxième profondeur.

2. Procédé selon la revendication 1, dans lequel l'alignement des réflexions primaires désaligne les réflexions fantômes (434a, 434b) dans les données sismiques qui correspondent aux régions au-dessus de la première profondeur (310a) .

3. Procédé selon la revendication 1, dans lequel les réflexions primaires correspondent aux régions au-dessous de la deuxième profondeur (310b).

4. Procédé selon la revendication 3, comprenant en outre la détermination de changements dans les régions au-dessous de la deuxième profondeur (310b).

5. Procédé selon la revendication 4, dans lequel la détermination de changements dans les régions au-dessous de la deuxième profondeur comprend la comparaison des données sismiques améliorées correspondant à un premier événement d'acquisition avec les données sismiques améliorées correspondant à un deuxième événement d'acquisition.

6. Procédé selon la revendication 1, dans lequel une quantité de déphasage ou de décalage temporel correspond à une différence de position ou à un retard de propagation entre une source sismique située à la première profondeur et une source sismique située à la deuxième profondeur.

7. Système comprenant :
une première source sismique (410a) située au-dessous d'une surface géophysique à une première profondeur (310a) et une deuxième source sismique (410b) située au-dessous de la surface géophysique à une deuxième profondeur (310b), dans lequel la deuxième profondeur est au-dessous de la première profondeur, et dans lequel ladite surface géophysique est une surface terrestre ou un lit marin ou un lit de rivière ;
un récepteur sismique (420) situé au-dessous de la surface géophysique et configuré pour acquérir des données sismiques conjointement avec l'activation de ladite pluralité de sources sismiques, dans lequel les données sismiques comprennent, pour chacune de ladite première source sismique et de ladite deuxième source sismique, une trace (430) comprenant des réflexions primaires (432a, 432b) et des réflexions fantômes (434a, 434b) ; et
un processeur (1200),
**caractérisé en ce que** ledit processeur (1200) est configuré pour aligner les réflexions primaires dans les données sismiques pour fournir des données sismiques améliorées, dans lequel l'alignement (630) comprend le déphasage ou le décalage temporel desdites traces d'une quantité fonction d'une différence entre ladite première profondeur et ladite deuxième profondeur.

8. Système selon la revendication 7, dans lequel l'alignement des réflexions primaires désaligne les réflexions fantômes (434a, 434b) dans les données sismiques qui correspondent aux régions au-dessus de la première profondeur (310a) .

9. Système selon la revendication 7, dans lequel les réflexions primaires correspondent aux régions au-dessous de la deuxième profondeur (310b).

10. Système selon la revendication 9, dans lequel le processeur (1200) est configuré pour déterminer des changements dans les régions au-dessous de la deuxième profondeur (310b).

11. Système selon la revendication 10, dans lequel le processeur (1200) détermine les changements dans les régions au-dessous de la deuxième profondeur en comparant les données sismiques améliorées correspondant à un premier événement d'acquisition avec les données sismiques améliorées correspondant à un deuxième événement d'acquisition.

12. Système selon la revendication 7, dans lequel une quantité de déphasage ou de décalage temporel correspond à une différence de position ou à un retard de propagation entre la première source sismique et la deuxième source sismique.
